# EUROPEAN PATENT APPLICATION

(11) **EP 4 560 282 A1**
(43) Date of publication of application: **28.05.2025**
(21) Application number: 23859835.3
(22) Date of filing: 04.07.2023
(51) Int. Cl.: G01M 3/02, G06T 7/00

(54) **INFORMATION PROCESSING DEVICE, INFORMATION PROCESSING METHOD, AND PROGRAM**

(30) Priority: 30.08.2022 JP 2022136947
(71) Applicant: Mitsubishi Heavy Industries, Ltd., Tokyo 100-8332 (JP)
(72) Inventor: IKEDA, Takashi, Tokyo 100-8332 (JP); SUZUKI, Keita, Tokyo 100-8332 (JP); ARAKAWA, Yoshiaki, Tokyo 100-8332 (JP); KAMIHARA, Nobuyuki, Tokyo 100-8332 (JP); INUI, Masayuki, Tokyo 100-8332 (JP); SHIBUYA, Hidekazu, Tokyo 100-8332 (JP); ISHIMOTO, Yoshitaka, Yokohama-shi, Kanagawa 220-0012 (JP)
(74) Representative: Studio Torta S.p.A.
(86) International application number: PCT/JP2023/024765
(87) International publication number: WO 2024/048065

(57) **Abstract**

This information processing device comprises an acquisition unit that acquires an inspection image obtained by photographing an inspection subject, and a detection unit that detects presence of gas in the vicinity of the inspection subject by using a prediction model that has the temporal and spatial change rates in the inspection image as input parameters and has information enabling detection of presence or absence of gas in the inspection image as output parameters.

## Description

### Technical Field

The present disclosure relates to an information processing device, an information processing method, and a program.

Priority is claimed on Japanese Patent Application No. 2022-136947, filed August 30, 2022, the content of which is incorporated herein by reference.

### Background Art

As a technology for visualizing a fluid such as a gas, it is considered to visualize a flow of a measurement target airflow by measuring a distribution of temperature fluctuations and displaying the distribution in time series. For example, PTL 1 discloses a technology for visualizing a flow of a fluid by acquiring temperature image data of a fluid captured by an infrared camera for a predetermined time, creating partial temperature data obtained by shifting temperature data for a certain period of time in a time direction by a certain analysis step from the temperature image data, performing a frequency analysis (Fourier transform processing) for each of the created partial temperature data, detecting a temperature fluctuation distribution for each of the certain periods of time, and displaying the temperature fluctuation distribution in time series.

### Citation List

### Patent Literature

[PTL 1] Japanese Unexamined Patent Application Publication No. 2020-52036

### Summary of Invention

### Technical Problem

In a technology of the related art, an infrared camera is fixedly installed, and it is premised that a background of a gas is uniform, for example, a wall or the like. On the other hand, in a case where gas leakage is detected and visualized in a petrochemical plant, a pipeline, a storage site, or the like, false detection of gas leakage may occur due to fluctuation of the background of the gas. As the fluctuation of the background, for example, sunlight, clouds, wind, dust, and fluctuation (heat haze) due to an air temperature can be considered. These behaviors are non-stationary phenomena with strong randomness in an instant, and it may be difficult to separate an airflow of the gas and the fluctuation of the background only by a time-series frequency analysis as the technology in the related art.

An object of the present disclosure is to provide an information processing device, an information processing method, and a program capable of accurately detecting presence of a gas.

### Solution to Problem

According to an aspect of the present disclosure, there is provided an information processing device including an acquisition unit that acquires an inspection image obtained by capturing an inspection target, and a detection unit that detects presence of a gas in a vicinity of the inspection target by using a prediction model in which a temporal and spatial change rate in the inspection image is set as an input parameter and information where whether or not the gas is present in the inspection image is detectable is set as an output parameter.

According to an aspect of the present disclosure, there is provided an information processing method including a step of acquiring an inspection image obtained by capturing an inspection target, and a step of detecting presence of a gas in a vicinity of the inspection target by using a prediction model in which a temporal and spatial change rate in the inspection image is set as an input parameter and information where whether or not the gas is present in the inspection image is detectable is set as an output parameter.

According to an aspect of the present disclosure, there is provided a program that causes an information processing device to execute a step of acquiring an inspection image obtained by capturing an inspection target, and a step of detecting presence of a gas in a vicinity of the inspection target by using a prediction model in which a temporal and spatial change rate in the inspection image is set as an input parameter and information where whether or not the gas is present in the inspection image is detectable is set as an output parameter.

### Advantageous Effects of Invention

According to the above-described aspect, presence of a gas can be accurately detected.

### Brief Description of Drawings

Fig. 1 is a schematic diagram showing an overall configuration of an information processing system according to an embodiment.
Fig. 2 is a block diagram showing a functional configuration of an information processing device according to the embodiment.
Fig. 3 is a flowchart showing an example of training processing of a prediction model according to the embodiment.
Fig. 4 is a flowchart showing an example of gas detection processing according to the embodiment.

### Description of Embodiments

### (Overall Configuration of Information Processing System)

Hereinafter, embodiments will be described in detail with reference to the drawings.

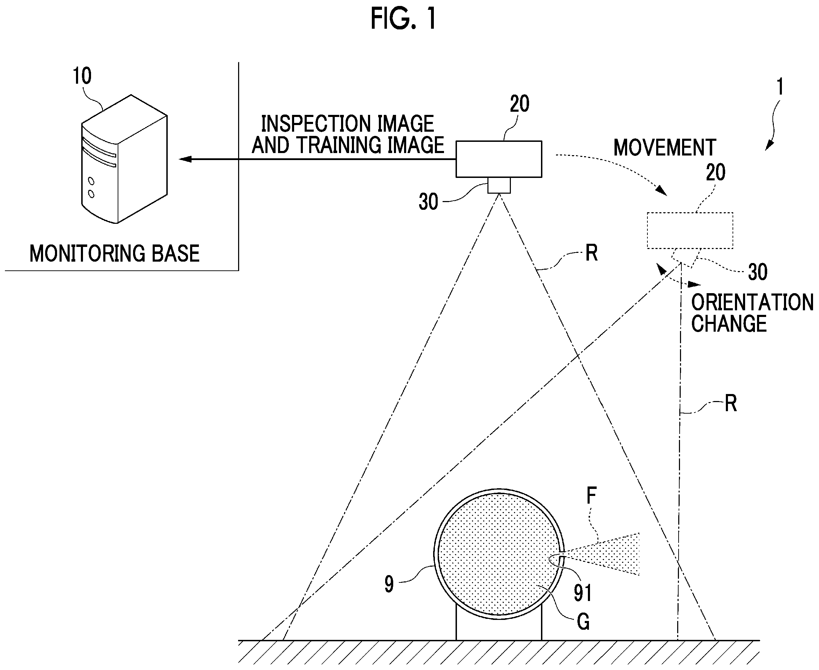

Fig. 1 is a schematic diagram showing an overall configuration of an information processing system according to an embodiment.

An information processing system 1 is a system for detecting presence (leakage) of a gas G (spray F of the gas G) in a vicinity of a gas pipe 9. The gas pipe 9 is installed at a gas use site or the like and is a pipe for circulating the gas G therein. The gas pipe 9 is an example of an inspection target according to the present embodiment. In another embodiment, for example, a storage tank of the gas G or the like may be set as an inspection target.

As shown in Fig. 1, the information processing system 1 includes an information processing device 10, a moving body 20, and a camera 30.

The moving body 20 is, for example, an unmanned aerial vehicle such as a drone, and moves in an installation area of the gas pipe 9 in accordance with a preset monitoring path or an operation instruction of an operator.

The camera 30 is mounted on the moving body 20 and captures the gas pipe 9. The camera 30 is, for example, an infrared camera that can detect a gas absorption wavelength (specific wavelength) of the gas G. In addition, the camera 30 can capture each part of an upper surface, a side surface, and the like of the gas pipe 9 by changing an orientation (capturing direction) of a capturing range R in accordance with a positional relationship between the moving body 20 and the gas pipe 9.

As the moving body 20 moves in the installation area, the camera 30 continuously captures the gas pipe 9. In addition, the moving body 20 transmits the image (moving image) captured by the camera 30 to the information processing device 10.

The information processing device 10 is communicably connected to the moving body 20. The information processing device 10 trains a prediction model for detecting presence of the gas G based on an image (hereinafter, also referred to as a training image) captured by the camera 30 in a case where there is no leakage of the gas G. Details of the prediction model will be described later. In addition, the information processing device 10 detects whether or not the gas G is present (leaked) in the vicinity of the gas pipe 9 based on an image (hereinafter, also referred to as an inspection image) captured by the camera 30 during the actual operation and the prediction model.

In addition, Fig. 1 shows an example in which the information processing device 10 is provided at a monitoring base separated from the installation area of the gas pipe 9, but the present disclosure is not limited to this. In another embodiment, the information processing device 10 may be incorporated into the moving body 20.

### (Functional Configuration of Information Processing Device)

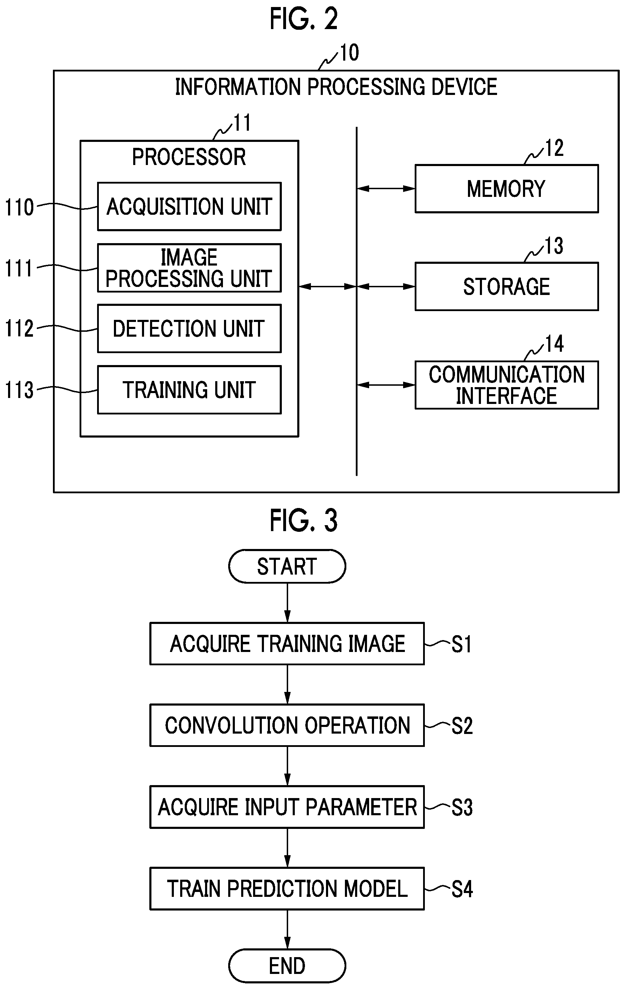

Fig. 2 is a block diagram showing a functional configuration of an information processing device according to the embodiment.

As shown in Fig. 2, the information processing device 10 includes a processor 11, a memory 12, a storage 13, and a communication interface 14.

The processor 11 operates in accordance with a predetermined program to exhibit functions as an acquisition unit 110, an image processing unit 111, a detection unit 112, and a training unit 113.

The acquisition unit 110 acquires an inspection image obtained by capturing the gas pipe 9.

The image processing unit 111 performs a convolution operation on the inspection image to generate a texture image.

The detection unit 112 detects the presence of the gas G in the vicinity of the gas pipe 9 by using a prediction model in which a temporal change and a spatial change of a brightness of the inspection image are set as input parameters and information where whether or not the gas G is present in the inspection image is detectable is set as an output parameter.

The training unit 113 trains the prediction model based on the temporal change and the spatial change in the brightness of the training image captured in a case where the gas G is not present in the vicinity of the gas pipe 9.

The memory 12 includes a memory area necessary for an operation of the processor 11.

The storage 13 is a so-called auxiliary storage device, and is, for example, a hard disk drive (HDD), a solid state drive (SSD), or the like.

The communication interface 14 is an interface for transmitting and receiving various kinds of information to and from an external device (moving body 20).

The predetermined program executed by the processor 11 of the information processing device 10 is stored in a computer-readable recording medium. Further, examples of the computer-readable recording medium include a magnetic disk, a magneto-optical disk, a CD-ROM, a DVD-ROM, a semiconductor memory, and the like. Further, this computer program may be transferred to a computer through a communication line, and the computer receiving the transfer may execute the program. Further, the program described above may be a program for implementing a part of the above-described functions. Further, the program may be a program, so-called a difference file (difference program) that can implement the above-mentioned functions in combination with a program already recorded in a computer system.

### (About Training Processing of Prediction Model)

Fig. 3 is a flowchart showing an example of training processing of a prediction model according to the embodiment.

Hereinafter, a flow of processing in which the prediction model is trained by the information processing device 10 will be described with reference to Fig. 3.

First, the acquisition unit 110 acquires the training image captured by the camera 30 (step S1). The training image is an image captured in a case where the gas G is not present in the vicinity of the gas pipe 9.

The image processing unit 111 performs the convolution operation on the training image as a gray scale arrangement to generate a texture image (step S2). The convolution operation is a method of creating a coarse pixel in which any pixel of the training image and adjacent pixels (for example, eight surrounding pixels) surrounding the periphery of the pixel using a filter of any size are integrated. As a value of the coarse pixel, a sum, an average, a maximum value, or the like of the original values of any pixel and the adjacent pixels is adopted. By this processing, it is possible to obtain a texture image in which a size of the arrangement is reduced while a texture of the training image is maintained, so that an operation speed in the subsequent processing (steps S3 and S4) can be increased. Here, the "texture" means a "feature" such as unevenness due to brightness or the like, and the "texture image" means an image having unevenness. In addition, since the change of the pixel group in a certain range can be evaluated, the fluctuation due to a noise in each of pixels of the original image can be eliminated. It should be noted that the noise here does not refer to the fluctuation of a jet and the background, but refers to, for example, noise generated by affecting ambient radio waves mixed in a case where the image is transmitted.

Next, the training unit 113 trains the prediction model using the texture image. The prediction model predicts whether or not an object reflected in the image is the gas G or the background (the object other than the gas G) based on a feature amount of the texture image, and outputs information with which it is possible to detect whether or not the gas G is present in each pixel. In the present embodiment, the training unit 113 trains the prediction model using a long short-term memory (LSTM).

LSTM is one of the recurrent neural networks (RNNs). In the LSTM, there are already accumulated data and newly obtained data, and in a case where the prediction model is updated, a network independently determines a feature amount of the newly obtained data, and updates the prediction model by referring to data in which data close to the found feature amount is accumulated. Specifically, the LSTM has a forgetting gate, an input gate, and an output gate. The forgetting gate performs selection and rejection of the accumulated data (long-term memory) in which the data correlated with a previous output (short-term memory) and the newly obtained data are left and the data not correlated are forgotten, among the accumulated data. The input gate accumulates the previous output (short-term memory) and the newly obtained data. The output gate outputs a prediction based on the previous output (short-term memory), the newly obtained data, and the data remaining in the forgetting gate (long-term memory). Therefore, the LSTM has an advantage in which prediction can also be performed in cyclic data having a plurality of cyclic features.

In addition, for example, for a certain image, the brightness of a part of the region is reduced due to an influence of the cloud. Further, the gas G is set to be reflected in another region separated from this region. In this case, the feature amount of the region in which the brightness is decreased due to the cloud is information not necessary for predicting whether or not the object is the gas G. Since the entire image, that is, the region (region in which the brightness is lowered due to the cloud) not spatially connected to the gas G is also trained in the normal RNN, the prediction accuracy may be decreased. In addition, in the normal LSTM, the temporal fluctuation is generally handled. On the other hand, in a case where it is assumed that the brightness of the region changes due to the influence of the cloud for a certain image, in a case where the gas G is not reflected in the region, and in a case where a cycle of the change in the brightness of the region due to the influence of the cloud is approximately the same as the cycle due to the gas G, the influence of the cloud and the fluctuation due to the gas G are predicted with confusion, and the prediction accuracy may be reduced.

Therefore, in the present embodiment, the LSTM trains not only the temporal fluctuation but also the spatial fluctuation as the feature amount, so that the spatial feature is also selected and rejected, and the accuracy of predicting whether or not the object is gas G. Since the spatial fluctuation also serves as the temporal fluctuation, the spatial fluctuation is added as one of the data (input parameters) used for the training.

Specifically, first, the training unit 113 acquires the input parameter that is the training data, from the texture image of the training image (step S3). The input parameter is an evaluation item of the fluctuation of the background included in the training image, and is a temporal and spatial change rate of the texture image in the present embodiment. Here, an example of using the brightness change rate will be described.

A temporal and spatial brightness change rate is information indicating a change rate of brightness with respect to time (frame) and a range (distance) over which the change in brightness extends on each image space of each time, for an element (pixel) in the arrangement of the texture images. This distance may be a distance represented by two-dimensional coordinates (xy coordinates) or may be a distance represented by polar coordinates.

Next, the training unit 113 trains a prediction model that uses the LSTM, sets the input parameter as training data, and outputs information (for example, a presence probability of the gas G) capable of detecting whether or not the gas G is present in each pixel (step S4).

As described above, the training image that is the source of the training data is an image captured in a case where the gas G is not present in the vicinity of the gas pipe 9. Therefore, the prediction model according to the present embodiment trains the change of the background other than the gas G in a series of images (moving images) in which the scenery changes from moment to moment, and removes data (for example, a change in the brightness value due to the influence of the cloud or a range on the image space in which the brightness value changes) related to the fluctuation of the background to perform prediction. The prediction model predicts that, after removing the fluctuation of the background, in a case where there is a fluctuation in the brightness for a certain pixel, the probability that the gas G is present in this pixel is high.

In a case where the information processing device 10 has a sufficient operation ability, step S2 may not be shown. In this case, in steps S3 to S4, the training unit 113 acquires the input parameter from the original training image to perform training.

In addition, in the present embodiment, the example has been described in which the temporal and spatial brightness change rate of the training image (texture image) is used as the input parameters (change rate), but the present disclosure is not limited to this. In another embodiment, (1) an average and a standard deviation of the brightness change rate of elements of the texture image, (2) an average and a standard deviation of a movement amount of corners of the elements of the texture image, and (3) a histogram shape change rate (the average and the standard deviation) in the brightness of the texture image may be adopted as the input parameters for each predetermined time interval. The predetermined time interval is set for each of (1) to (3). The corners of the elements are feature points detected by known corner detection processing. For example, by a parameter of (1), a fluctuation due to sunlight or a heat haze can be evaluated. A fluctuation of wind or sand dust can be evaluated by a parameter of (2). A fluctuation of the cloud can be evaluated by a parameter of (3). In addition, the interval between two data for obtaining the brightness change rate is determined, for example, as an interval at which an average value of the brightness change rates of all elements is maximized.

In addition, environmental conditions for each time may be added as the input parameters. An environmental condition is, for example, data such as an air temperature, a humidity, weather, and an atmospheric pressure. In addition, in a case where the above-described (1) to (3) are adopted as the input parameters, each data of the environmental condition is acquired in accordance with time intervals set for each of (1) to (3). As a result, it is possible to train a prediction model capable of predicting under any environmental condition by the LSTM neural network with a forgetting gate.

In addition, in the present embodiment, the example is described, in which the training unit 113 acquires the input parameter from the training image (texture image), but the present disclosure is not limited to thereto. In another embodiment, another computer, an engineer, or the like may extract the feature amount set as the input parameter from the image and use the extracted feature amount as the training data of the prediction model.

### (About Gas Detection Processing)

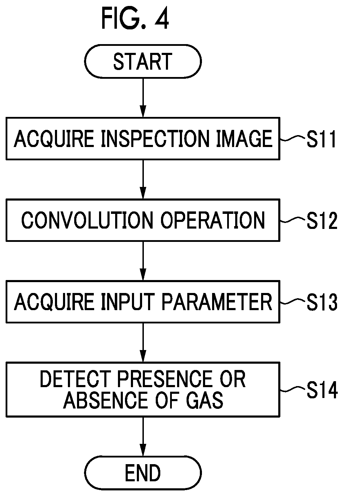

Fig. 4 is a flowchart showing an example of gas detection processing according to the embodiment.

Here, a flow of processing of detecting the gas G by the information processing device 10 will be described with reference to Fig. 4. It should be noted that, in the present embodiment, the information processing device 10 is set to sequentially acquire the inspection images captured by the camera 30 to perform detection of the gas G in real time. In another embodiment, the information processing device 10 may perform detection of the gas G based on the inspection image acquired as a whole after the camera 30 captures a part or the whole of the gas pipe 9.

First, the acquisition unit 110 acquires the inspection image captured by the camera 30 (step S11).

The image processing unit 111 performs the convolution operation on the inspection image as a gray scale arrangement to generate a texture image (step S12). Contents of the processing are the same as those in step S2 of Fig. 3. By this processing, it is possible to obtain a texture image in which a size of the arrangement is reduced while a texture of the inspection image is maintained, so that an operation speed in the subsequent processing (steps S13 and S14) can be increased. In addition, since the change of the pixel group in a certain range can be evaluated, the fluctuation due to a noise in each of pixels of the original image can be eliminated.

Next, the detection unit 112 performs detection of the gas G based on the texture image and the trained prediction model. Specifically, first, the detection unit 112 acquires an input parameter to be input to the prediction model from the texture image of the inspection image (step S13). The input parameter is a temporal and spatial brightness change rate of the texture image.

Further, the detection unit 112 inputs the input parameter to the prediction model and obtains the presence probability of the gas G of each pixel as an output. The detection unit 112 detects that the gas G is present in this pixel in a case where the presence probability of the gas G exceeds a predetermined threshold value (step S14).

The information processing device 10 executes a series of pieces of processing of Fig. 4 each time the inspection image is acquired from the moving body 20 (camera 30) to monitor presence or absence of leaking of the gas G from the gas pipe 9.

In a case where the information processing device 10 has a sufficient operation ability, step S12 may not be shown. In this case, in steps S13 and S14, the detection unit 112 acquires the input parameter from an original inspection image to perform detection of the gas G.

In addition, environmental conditions for each time may be added as the input parameters. An environmental condition is, for example, data such as an air temperature, a humidity, weather, and an atmospheric pressure. In addition, in a case where the above-described (1) to (3) are adopted as the input parameters, each data of the environmental condition is acquired in accordance with time intervals set for each of (1) to (3). As a result, it is possible to detect the presence or absence of the gas G under any environmental condition by the LSTM neural network with a forgetting gate.

In addition, in the present embodiment, an example in which the detection unit 112 acquires the input parameter from the inspection image (texture image) has been described. However, the present disclosure is not limited thereto. In another embodiment, another computer, an engineer, or the like may extract the feature amount set as the input parameter from the image, and the detection unit 112 may detect the gas G by using the input parameter designated by the other computer, the engineer, or the like.

In addition, in the present embodiment, the example has been described in which the prediction model predicts the presence or absence of the gas G of each pixel (outputs the presence probability), but the present disclosure is not limited thereto. In another embodiment, the prediction model may output, for each element of arrangement of images (texture images) acquired in a certain period, (1) the brightness change rate, (2) the change rate in the movement amount of the corner, and (3) the histogram shape change rate in the brightness of the texture image for the predetermined time interval. The predetermined time interval is set for each of (1) to (3). In this case, in step S14 of Fig. 4, for example, in a case where the standard deviation of the brightness change rate obtained from the data in a case where the gas G is not present exceeds ± 3 times (± 3σ), the detection unit 112 detects that the gas G is present in this element. In addition, the detection unit 112 may further apply a background difference method to the pixels corresponding to the elements in which the gas G is detected, to extract only a movement of a spray F portion.

### (Actions and Effects)

As described above, the information processing device 10 according to the present embodiment includes the acquisition unit 110 that acquires the inspection image obtained by capturing the gas pipe 9, and the detection unit 112 that detects the presence of the gas G in the vicinity of the gas pipe 9 by using the prediction model in which the temporal and spatial brightness change rate of the inspection image is set as the input parameter and the information where whether or not the gas G is present in the inspection image is detectable as the output parameter.

As a result, the information processing device 10 can distinguish whether or not the object reflected in each part of the inspection image is the gas G or the background other than the gas G by considering not only the temporal change of the background other than the gas G in the inspection image but also the spatial change. With this, the information processing device 10 can accurately detect the presence (leakage) of the gas G in the vicinity of the gas pipe 9.

In addition, the prediction model is a machine learning model trained using LSTM.

The evaluation item (in the present embodiment, the brightness change rate) is a long-term frequency due to seasonal variation, climate change, and the like, but such a long-term frequency cannot be trained by a normal machine learning method (for example, RNN). On the other hand, the prediction model according to the present embodiment can hold and train data having a similar tendency in the evaluation item among accumulated past data by the forgetting gate of the LSTM. Therefore, by using such a prediction model, the information processing device 10 can accurately detect the gas G without being affected by a seasonal variation, a climate change, and the like.

In addition, the input parameter include the average and the standard deviation of the brightness change rate, the average and the standard deviation of the movement amount of the corners of the elements included in the inspection image, and the histogram shape change rate in the brightness of the inspection image.

As a result, the information processing device 10 can distinguish the change in the brightness due to various factors such as the sunlight, the heat haze, the wind, the sand dust, and the cloud and the change in the brightness due to the presence of the gas G.

In addition, the information processing device 10 further includes the image processing unit 111 that performs the convolution operation on the inspection image to generate the texture image. The detection unit 112 acquires the input parameter from the texture image.

In this way, the information processing device 10 can obtain the texture image in which the size of the arrangement is reduced while holding the texture of the inspection image, so that the operation speed in the detection unit 112 can be increased. In addition, since the change of the pixel group in a certain range can be evaluated, the fluctuation due to a noise in each of pixels of the original image can be eliminated. As a result, the detection accuracy of the gas G can be improved.

While one embodiment has been described in detail with reference to the drawings, the specific configuration is not limited to the above description, and various design changes and the like can be made. That is, in other embodiments, the procedures of processing described above may be changed as appropriate. In addition, some of the processing may be executed in parallel.

The information processing device 10 according to the embodiment described above may be configured by a single computer, or the configuration of the information processing device 10 may be divided and disposed in a plurality of computers, and the plurality of computers may function as the information processing device 10 by cooperating with each other. In this case, a part of the computers configuring the information processing device 10 may be mounted in the moving body 20, and the other computers may be provided outside the moving body 20.

In addition, in the embodiment described above, the example is described in which the camera 30 is mounted on the moving body 20, but the present disclosure is not limited thereto. For example, in another embodiment, the camera 30 may be a fixed camera installed at a predetermined interval in the installation area of the gas pipe 9.

### <Additional Note>

The information processing device, the information processing method, and the program described in the above-described embodiment are understood, for example, as follows.

(1) With a first aspect, an information processing device 10 includes an acquisition unit 110 that acquires an inspection image obtained by capturing an inspection target 9, and a detection unit 112 that detects presence of a gas G in a vicinity of the inspection target 9 by using a prediction model in which a temporal and spatial change rate in the inspection image is set as an input parameter and information where whether or not the gas G is present in the inspection image is detectable is set as an output parameter.

As a result, the information processing device 10 can distinguish whether or not the object reflected in each part of the inspection image is the gas G or the background other than the gas G by considering not only the temporal change of the background other than the gas G in the inspection image but also the spatial change. With this, the information processing device 10 can accurately detect the presence (leakage) of the gas G in the vicinity of the gas pipe 9.

(2) With a second aspect, in the information processing device 10 according to the first aspect, the change rate is a brightness change rate in the inspection image.
(3) With the third aspect, in the information processing device 10 according to the first or second aspect, the prediction model is a machine learning model trained by using a long short-term memory (LSTM).

By using such a prediction model, the information processing device 10 can accurately detect the gas G without being affected by a seasonal variation, a climate change, and the like.

(4) With a fourth aspect, in the information processing device 10 according to any one of the first to third aspects, the input parameter includes an average and a standard deviation of a brightness change rate, an average and a standard deviation of a corner movement amount in an element included in the inspection image, and a histogram shape change rate in a brightness of the inspection image.

As a result, the information processing device 10 can distinguish the change in the brightness due to various factors such as the sunlight, the heat haze, the wind, the sand dust, and the cloud and the change in the brightness due to the presence of the gas G.

(5) With a fifth aspect, in the information processing device 10 according to any one of the first to fourth aspects, the information processing device 10 further includes an image processing unit 111 that performs a convolution operation on the inspection image to generate a texture image, and the detection unit 112 acquires the input parameter from the texture image.

In this way, the information processing device 10 can obtain the texture image in which the size of the arrangement is reduced while holding the texture of the inspection image, so that the operation speed in the detection unit 112 can be increased. In addition, since the change of the pixel group in a certain range can be evaluated, the fluctuation due to a noise in each of pixels of the original image can be eliminated. As a result, the detection accuracy of the gas G can be improved.

(6) With a sixth aspect, an information processing method includes a step of acquiring an inspection image obtained by capturing an inspection target 9, and a step of detecting presence of a gas G in a vicinity of the inspection target 9 by using a prediction model in which a temporal and spatial change rate in the inspection image is set as an input parameter and information where whether or not the gas G is present in the inspection image is detectable is set as an output parameter.
(7) With a seventh aspect, a program that causes an information processing device 10 to execute a step of acquiring an inspection image obtained by capturing an inspection target 9, and a step of detecting presence of a gas G in a vicinity of the inspection target 9 by using a prediction model in which a temporal and spatial change rate in the inspection image is set as an input parameter and information where whether or not the gas G is present in the inspection image is detectable is set as an output parameter.

### Industrial Applicability

According to the above-described aspect, presence of a gas can be accurately detected.

### Reference Signs List

1: information processing system
9: gas pipe (inspection target)
10: information processing device
11: processor
110: acquisition unit
111: image processing unit
112: detection unit
113: training unit
12: memory
13: storage
14: communication interface
20: moving body
30: camera

## Claims

1. An information processing device comprising:
an acquisition unit that acquires an inspection image obtained by capturing an inspection target; and
a detection unit that detects presence of a gas in a vicinity of the inspection target by using a prediction model in which a temporal and spatial change rate in the inspection image is set as an input parameter and information where whether or not the gas is present in the inspection image is detectable is set as an output parameter.

2. The information processing device according to claim 1,
wherein the change rate is a brightness change rate in the inspection image.

3. The information processing device according to claim 1,
wherein the prediction model is a machine learning model trained by using a long short-term memory (LSTM).

4. The information processing device according to claim 1,
wherein the input parameter includes an average and a standard deviation of a brightness change rate and an average and a standard deviation of a corner movement amount in an element included in the inspection image, and a histogram shape change rate in a brightness of the inspection image.

5. The information processing device according to any one of claims 1 to 4, further comprising:
an image processing unit that performs a convolution operation on the inspection image to generate a texture image,
wherein the detection unit acquires the input parameter from the texture image.

6. An information processing method comprising:
a step of acquiring an inspection image obtained by capturing an inspection target; and
a step of detecting presence of a gas in a vicinity of the inspection target by using a prediction model in which a temporal and spatial change rate in the inspection image is set as an input parameter and information where whether or not the gas is present in the inspection image is detectable is set as an output parameter.

7. A program that causes an information processing device to execute:
a step of acquiring an inspection image obtained by capturing an inspection target; and
a step of detecting presence of a gas in a vicinity of the inspection target by using a prediction model in which a temporal and spatial change rate in the inspection image is set as an input parameter and information where whether or not the gas is present in the inspection image is detectable is set as an output parameter.
